# EUROPEAN PATENT SPECIFICATION

(11) **EP 2 131 201 B1**
(45) Date of publication and mention of the grant of the patent: **20.03.2013**
(21) Application number: 09007291.9
(22) Date of filing: 02.06.2009
(51) Int. Cl.: G01P 3/488, G01P 3/49, F01D 21/00

(54) **High temperature speed sensor**
Hochtemperaturgeschwindigkeitssensor
Capteur de vitesse haute température

(30) Priority: 06.06.2008 GB 0810408
(43) Date of publication of application: 09.12.2009
(73) Proprietor: WESTON AEROSPACE LIMITED, Farnborough Hampshire GU14 7PW (GB)
(72) Inventor: Turner, Nigel Philip, Farnborough Hampshire GU14 7PW (GB)
(74) Representative: Ponder, William Anthony John

(56) References cited:
- GB-A- 1 585 496
- US-A- 4 626 781

## Description

The present invention relates to a gas turbine shaft speed sensor.

The use of magnetic sensors in cooperation with, for example, one or more projections on a shaft to give an output from which shaft rotational speed or torque can be determined is well known. In such sensors, a voltage induced in a coil by changes in the magnetic flux pattern experienced by the coil, caused by movement of a body of magnetic material in proximity to the coil, is detected and/or measured.

This type of sensor has been used in gas turbine engines in order to sense the speed of the turbine by detecting the teeth of a phonic wheel passing the sensor. The speed of a rotating gas turbine shaft is typically monitored by monitoring the movement of a magnetic toothed phonic or tone wheel, which rotates with the gas turbine shaft. A magnetic speed sensor monitors the changes in a magnetic field as a tooth passes it. The passage of each tooth generates a probe signal pulse and the probe signal train is used to calculate the rotational speed of the toothed wheel by measuring the time between successive pulses, or counting a number of pulses in a fixed time. The rotational speed of the gas turbine shaft is then derived from the speed of the phonic or tone wheel. The interior of a gas turbine engine can be a high temperature environment, and accordingly it is desirable that the sensing coils used are robust and continue to work at high temperature.

Proximity and speed sensing coils for gas turbine engines have typically been constructed from enamel insulated wire. This limits the working temperature of the coil to around 260°C. Previous attempts to increase sensing coil working temperature, such as the use of woven fibreglass, or ceramic fibres have proved bulky and not robust. Unsheathed ceramic coating on the coil has been tried, but that has proven delicate and difficult to work with. Anodised aluminium wire can offer a small increase in working temperature, to approximately 350°C, but aluminium wire is not robust and is difficult to join.

The present invention provides a sensor as defined in the appended claims, to which reference should now be made. The present invention provides a sensor including a sensing coil that allows working temperatures up to around 1000°C, and that is robust. Preferred features of the invention are defined in the dependent claims.

Embodiments of the invention will now be described in detail, with reference to the accompanying drawings, in which:
Figure 1 is a cross-section through a mineral insulated cable forming a coil for use in a sensor in accordance with the present invention;
Figure 2 illustrates a variable reluctance sensor using a mineral insulated sensing coil in accordance with the present invention;
Figure 3 illustrates a passive eddy current sensor using a mineral insulated sensing coil in accordance with the present invention; and
Figure 4 illustrates an active eddy current sensor using a mineral insulated sensing coil in accordance with the present invention.

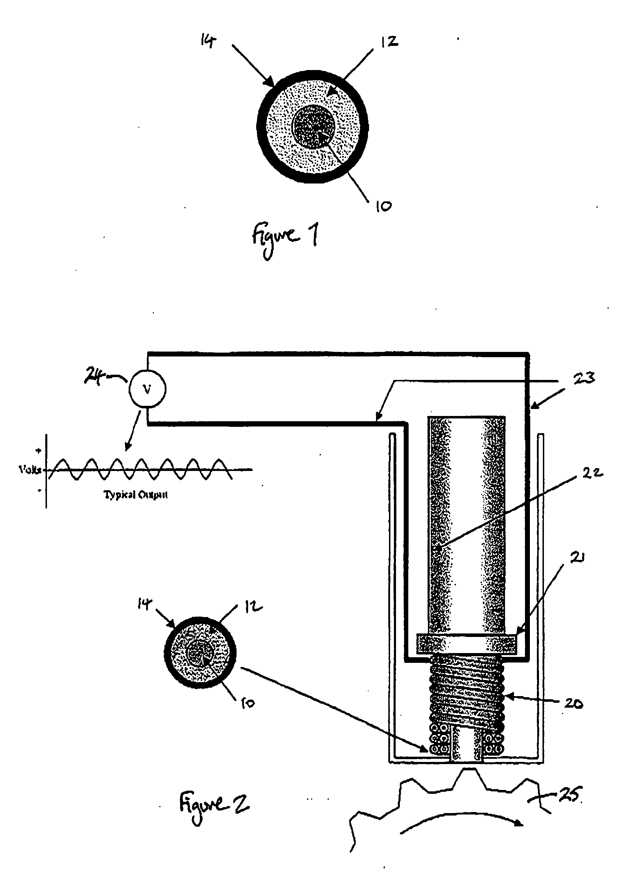

Figure 1 shows in cross-section a mineral insulated cable. The cable comprises a central conductor 10, which is typically formed of copper, but it may be formed of any other suitable conductive material. Surrounding the central conductor is a layer of mineral insulator 12, The mineral insulator is typically formed of magnesium oxide (MgO), Silica or Aluminium oxide (Al₂O₃). However, other mineral insulator materials may be used. Surrounding the mineral insulator layer is a metallic sheath 14.

Mineral insulated cable of this type is well known and has been used in coils in industries such as the nuclear industry, for measuring the shape and position of plasma boundaries (see for example P2C-D-91, 23rd Symposium on Fusion Technology, 20-24 September 2004, Fondazione GN, Venice, Italy) and in the metallurgy industry for measuring molten metal levels (see, for example, GB 1585496).

Mineral insulated cable of the type shown in Figure 1 can now be manufactured with a diameter less than 1 mm, and even as small as 0.25mm in diameter. These dimensions make it practical for use in sensing coils in gas turbine engines and in automotive applications. Mineral insulated cable of this type forms a robust coil that allows working temperatures limited only by the materials within the mineral insulated cable. Typically, this allows working temperatures up to around 1000°C. In the case of variable reluctance sensors, as illustrated in Figure 2, the upper limit of working temperature is, in fact, limited by the Curie temperature of the magnet used in the sensor, which is typically around 700°C, rather than by the sensing coil. However, a mineral insulated cable exciter coil could replace the magnet to further extend the temperature range if required.

For use in a sensing coil, the metallic sheath is made from a non-magnetic material, in order to avoid any interference with the operation of the sensor. The metallic sheath is typically formed of stainless steel, or a Nickel alloy such as Inconel 600, but other metals or alloys may be used.

Mineral insulated cable can be made by placing copper rods inside a cylindrical metallic sheath and filling the space between with dry MgO and/or other insulator powder, The complete assembly is then pressed between rollers to reduce its diameter.

Apart from providing an increase in the working temperature range, another benefit of using mineral insulated coils in the sensor is that, due to the robustness of the metallic outer sheath, no additional insulation is required on the parts of the apparatus which the coil is formed around and is in contact with. Typically, in a variable reluctance,sensor as illustrated in Figure 2, the pole piece and end face of the sensor housing needs additional insulation when used in a gas turbine engine on an aircraft. Even with previous high temperature designs using glass fibre, ceramic coated wire, additional insulation is required on the pole piece and the surrounding metalwork, as the normal insulation is not very strong and would not withstand a high voltage generated during a lightening strike. This additional insulation, in the form of glass fibre, ceramic or mica, is typically bulky, not very robust, and prone to breakdown. By using a mineral insulated cable of the type shown in Figure 1 this additional insulation is no longer required.

Figure 2 shows an example of a variable reluctance sensor for sensing the rotational speed of a shaft, using a mineral insulated sensing coil 20 in accordance with the present invention. The mineral insulated cable forming the coil can have a diameter from around 0.25mm to several mm, but it is preferably less than 1 mm. The thickness of the sheath layer is typically between 10% and 20% of the diameter of the cable. The mineral insulator layer also has a thickness of between 10% and 20% of the cable diameter. The sensor comprises the coil 20 wound around a pole piece 21. The pole piece is magnetised by a magnet 22. The voltage across the coil is monitored. A voltage monitoring means is attached to the coil by leadout wires 23. A phonic wheel, which consists of a toothed wheel, where the teeth are formed of a magnetic material, is mounted on the shaft close to the sensing coil. The magnetic flux in the pole piece 21 (and hence the voltage induced in the coil 20), depends upon the strength of the magnet 22 and upon the magnetic reluctance of the circuit consisting of the magnet, the pole piece, the coil, the air gap, the phonic wheel, and the air path returning the magnetic field from the phonic wheel to the magnet. As the teeth of the phonic wheel pass the end of the pole piece the reluctance of the magnet circuit changes, resulting in a different voltage induced in the sensing coil 20. From the voltage signal measured by the voltage measuring means 24, the rotational speed of the phonic wheel, and hence the shaft, can be determined. A variable reluctance sensor of this type is described in more detail in EP 1355131, or US 4 626 781.

The use of a mineral insulated coil in the apparatus shown in Figure 2 allows for higher operating temperatures and increased reliability compared to prior sensors of the same type.

One of the potential issues with the use of mineral insulated cable coil, as described with reference to Figures 1 and 2, is whether the sheath material forms a secondary coil, effectively a shorted tum, which suppresses the output from the primary coil. The inventor has performed tests comparing the output from mineral insulated coils and from enamelled copper wire coils. The inventor found that the sheath does not cause significant problems, as the sheath material has a relatively high resistivity and a relatively high contact resistance between turns. Contact resistance depends on a number of factors, including surface roughness, surface oxidation and the resistivity of the material. Accordingly there are steps, such as surface roughening, that can be taken to increase contact resistance and thereby reduce the impact of the sheath on the output from the primary coil if required.

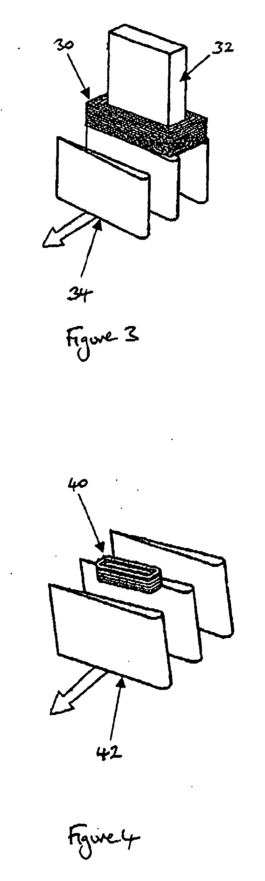

Figures 3 and 4 show two further example applications of a mineral insulated sensing coil. The examples are eddy current sensors used for measuring jet engine blade passing frequency and/or blade tip clearance. This is another example of an application where a coil having a high operating temperature is required, as the engine casing in a jet engine is often well in excess of the 250°C limitation of enamelled wire.

Figure 3 shows a passive eddy current sensor using a mineral insulated sensing coil 30. The passing blades 34 interrupt the field of the magnet 32 and eddy currents are produced in the blades. The resulting change in magnetic flux is picked up by the mineral insulated sensing coil 30. The voltage output from the sensing coil can then be analysed to determine blade passing frequency and/or blade tip clearance.

Figure 4 shows an active eddy current sensor in which the mineral insulated sensing coil 40 produces its own magnetic flux. The passing blades 42 interrupt the magnetic field created by the excited coil 40 and eddy currents are produced in the blades. The resulting changes in magnetic flux induce different voltages within the coil 40. The induced voltage can then be analysed to determine the passing frequency of the turbine blade and/or blade tip clearance.

## Claims

1. A gas turbine shaft speed sensor **characterised in that** it includes a sensing coil (20) formed from mineral insulated cable, the cable comprising:
a conductive wire (10);
a layer of mineral insulation (12) surrounding the conductive wire;
and a metallic sheath (14) surrounding the layer of mineral insulation.

2. A gas turbine shaft speed sensor according to claim 1, wherein the mineral insulation (12) includes at least one of magnesium oxide, aluminium oxide and silica.

3. A gas turbine shaft speed sensor according to claim 1 or 2, wherein the metallic sheath (14) is formed from a non-magnetic metal.

4. A gas turbine shaft speed sensor according to claim 3, wherein the metallic sheath (14) is formed from stainless steel or a nickel alloy,

5. A gas turbine shaft speed sensor according to any preceding claim, wherein the cable has a diameter of less than 1 mm.

6. A gas turbine shaft speed sensor according to any preceding claim, wherein the metallic sheath (14) has a thickness of between 10% and 20% of the diameter of the cable.

7. A gas turbine shaft speed sensor according to any preceding claim, wherein the sensor is a variable reluctance proximity or speed sensor, and wherein the voltage induced in the coil (20) as a result of changes in magnetic flux experienced by the coil caused by the presence of an object in proximity to the coil, is detected by a voltage measuring means (24).

8. A gas turbine shaft speed sensor according to any one of claims 1 to 6, wherein the sensor is an eddy current sensor.

9. A gas turbine shaft speed sensor according to claim 8, wherein the current sensor is an active eddy sensor.

10. A gas turbine shaft speed according to claim 8, wherein the current sensor is a passive eddy sensor.

## Patentansprüche

1. Gasturbinenwellen-Drehzahlsensor, **dadurch gekennzeichnet, dass** er eine Sensorspule (20) aufweist, die aus mineralisoliertem Kabel hergestellt ist, wobei das Kabel Folgendes umfasst:
einen leitfähigen Draht (10),
eine den leitfähigen Draht umgebende Schicht aus mineralischer Isolierung (12)
und einen die Schicht aus mineralischer Isolierung umgebenden metallischen Mantel (14).

2. Gasturbinenwellen-Drehzahlsensor nach Anspruch 1, wobei die mineralische Isolierung (12) wenigstens eines der Folgenden umfasst: Magnesiumoxid, Aluminiumoxid und Siliziumdioxid.

3. Gasturbinenwellen-Drehzahlsensor nach Anspruch 1 oder 2, wobei der metallische Mantel (14) aus einem nichtmagnetischen Metall hergestellt ist.

4. Gasturbinenwellen-Drehzahlsensor nach Anspruch 3, wobei der metallische Mantel (14) aus Edelstahl oder einer Nickellegierung hergestellt ist.

5. Gasturbinenwellen-Drehzahlsensor nach einem der vorhergehenden Ansprüche, wobei das Kabel einen Durchmesser von weniger als 1 mm hat.

6. Gasturbinenwellen-Drehzahlsensor nach einem der vorhergehenden Ansprüche, wobei der metallische Mantel (14) eine Dicke zwischen 10 % und 20 % des Kabeldurchmessers hat.

7. Gasturbinenwellen-Drehzahlsensor nach einem der vorhergehenden Ansprüche, wobei der Sensor ein Variable-Reluktanz-Näherungs- oder -Drehzahlsensor ist und wobei die Spannung, die infolge von Veränderungen des von der Spule erfahrenen magnetischen Flusses, die durch die Anwesenheit eines Objekts in der Nähe der Spule verursacht werden, in der Spule (20) induziert wird, von einer Spannungsmesseinrichtung (24) erfasst wird.

8. Gasturbinenwellen-Drehzahlsensor nach einem der Ansprüche 1 bis 6, wobei der sensor ein Wirbeletromsensor ist.

9. Gasturbinenwellen-Drehzahlsensor nach Anspruch 8, wobei der Stromsensor ein aktiver Wirbelstromsensor ist.

10. Gasturbinenwellen-Drehzahlsensor nach Anspruch 8, wobei der Stromsensor ein passiver Wirbelstromsensor ist.

## Revendications

1. Capteur de vitesse d'arbre de turbine à gaz **caractérisé en ce qu'**il comprend une bobine de détection (20) formée à partir d'un câble à isolation minérale, le câble comprenant
un fil conducteur (10) ;
une couche d'isolation minérale (12) entourant le fil conducteur ;
et une gaine métallique (14) entourant la couche d'isolation minérale.

2. Capteur de vitesse d'arbre de turbine à gaz selon la revendication 1, dans lequel l'isolation minérale (12) comporte au moins l'un d'un oxyde de magnésium, d'un oxyde d'aluminium et de silice.

3. Capteur de vitesse d'arbre de turbine à gaz selon la revendication 1 ou 2, dans lequel la gaine métallique (14) est formée dans un métal non magnétique.

4. Capteur de vitesse d'arbre de turbine à gaz selon la revendication 3, dans lequel la gaine métallique (14) est formée en acier inoxydable ou dans un alliage de nickel.

5. Capteur de vitesse d'arbre de turbine à gaz selon l'une quelconque des revendications précédentes, dans lequel la câble a un diamètre de moins de 1 mm.

6. Capteur de vitesse d'arbre de turbine à gaz selon l'une quelconque des revendications précédentes, dans lequel la gaine métallique (14) a une épaisseur entre 10% et 20% du diamètre du câble.

7. Capteur de vitesse d'arbre de turbine à gaz selon l'une quelconque des revendications précédentes, dans lequel le capteur est un capteur de proximité ou de vitesse à réluctance variable, et dans lequel la tension induite dans la bobine (20) à la suite de changements du flux magnétique subis par la bobine causés par la présence d'un objet à proximité de la bobine est détectée par un moyen de mesure de tension (24).

8. Capteur de vitesse d'arbre de turbine à gaz selon l'une quelconque des revendications précédentes 1 à 6, dans lequel le capteur est un capteur de courant de Foucault.

9. Capteur de vitesse d'arbre de turbine à gaz selon la revendication 8, dans lequel le capteur de courant est un capteur de courant de Foucault actif.

10. Capteur de vitesse d'arbre de turbine à gaz selon la revendication 8, dans lequel le capteur de courant est un capteur de courant de Foucault passif.
